## Europäisches Patentamt

## European Patent Office

## Office européen des brevets

(19)

(11) Veröffentlichungsnummer: **0 235 374**
**B1**

(12) **EUROPÄISCHE PATENTSCHRIFT**

(45) Veröffentlichungstag der Patentschrift:
**25.07.90**

(51) Int. Cl.⁵: **C08F 2/04**, B01J 19/18

(21) Anmeldenummer: **86116548.8**

(22) Anmeldetag: **28.11.86**

(54) **Kühlvorrichtung zum Einbau in einen Polymerisations-Reaktor.**

(30) Priorität: **26.02.86 DE 3606134**

(43) Veröffentlichungstag der Anmeldung:
**09.09.87 Patentblatt 87/37**

(45) Bekanntmachung des Hinweises auf die Patenterteilung:
**25.07.90 Patentblatt 90/30**

(84) Benannte Vertragsstaaten:
**AT BE DE ES FR GB GR IT NL SE**

(56) Entgegenhaltungen:
**WO-A-82/00343**
**FR-A- 616 368**
**FR-A- 2 283 151**
**FR-A- 2 366 317**
**US-A- 2 915 292**
**US-A- 4 552 724**

(73) Patentinhaber: **Uhde GmbH,**
**Friedrich-Uhde-Strasse 15 Postfach 262,**
**D-4600 Dortmund 1(DE)**

(72) Erfinder: **Röder, Klaus, Dipl.-Ing., Grüner Weg 21 a,**
**D-6350 Bad Nauheim(DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1(DE)**

ACTORUM AG

**Beschreibung**

Die Erfindung richtet sich auf eine Kuhlvorrichtung zum Einbau in einen mit einem Rührwerk versehenen Polymerisations-Reaktor mit einem Kühlmitteleintritt, einem in das wesentlichen in das zu kühlende Medium eintauchenden zylindrischen Kühlkörper und einem Kühlmittelaustritt.

Bei den bisher bekannten Kühlern, sogenannten Stromstörern, werden lanzenartige Kühlstäbe durch den oberen Reaktorboden in das zu kühlende Medium gesteckt. Diese Stäbe haben am oberen Ende sowohl einen Kühlmitteleintritt als auch einen Kühlmittelaustritt. Ein wesentlicher Nachteil dieser von oben eingeschobenen Kühlstäbe besteht darin, daß sie den Gasraum durchsetzen, so daß die Gefahr besteht, daß sich zwischen den Phasengrenzlinien am oberen Reaktorboden Polymer-Ablagerungen bilden. Diese Ablagerungen können ein erhebliches Gewicht erreichen. Brechen sie daher ab, können diese Polymer-Klumpen beispielsweise die Rührer im Reaktor zerstören u. dgl. mehr.

Es sind bereits einige Versuche unternommen worden, hier Verbesserungen zu schaffen. So wurde beispielsweise versucht, eine sehr hohe Oberflächenglätte dieser Kühllanzen zu erreichen oder auch belagverhindernde Additive zugesetzt. Diese Versuche haben aber nicht zu dem gewünschten Erfolg geführt.

Aufgabe der Erfindung ist daher die Schaffung einer Lösung, mit der bei Aufrechterhaltung einer guten Kühl-/Störleistung der Kühlvorrichtung das Ablagern von Polymeren in der Phasengrenze zu verhindern.

Bei einer Kühlvorrichtung der eingangs bezeichneten Art wird diese Aufgabe gemäß der Erfindung dadurch gelöst, daß der Kühlmitteleintritt und der Kühlmittelaustritt in den Kühlkörper in der Gebrauchslage an der Reaktorwand unterhalb der Phasengrenzlinie des Mediums bei laufendem Rührer angeordnet sind.

Es hat sich gezeigt, daß diese Anordnung gemäß der Erfindung zu wesentlichen Vorteilen führt. Der obere Kühlmittelein- bzw. -austritt in die Kühlvorrichtung kann bei stehendem Rührer beispielsweise oberhalb der Phasengrenzfläche wenigstens teilweise liegen. Wird der Rührer eingeschaltet, wird die Phasengrenzfläche in einen zur Mitte hin absinkenden und zum Rand hin ansteigenden Strömungskegel verwandelt, so daß dann auch der Oberbereich des Kühlmittelein- bzw. -austrittes unterhalb der Phasengrenzfläche liegt. Damit ist aber die Gefahr der Bildung von Polymer-Klumpen nicht mehr gegeben, da die gesamte Kühlvorrichtung unterhalb der Phasengrenzfläche liegt.

In Ausgestaltung sieht die Erfindung vor, daß der Kühlmitteleintritt und der Kühlmittelaustritt als bogenförmige Rohrstutzen am Anfang und Ende des Kühlzylinders ausgebildet sind. Damit werden scharfe Kanten, Ecken od. dgl. an der Kühlvorrichtung vermieden, bei denen ansonsten immer die Gefahr von Unregelmäßigkeiten, z.B. auch der Polymer-Bildung, bestünde. An Flächen starker Steigungsänderung kann auch die Kühlleistung nicht immer gewährleistet sein, was wiederum zu Mängeln führen kann.

Die Erfindung sieht auch vor, daß insbesondere die von der axial geraden Zylindermantelfläche abweichenden Oberflächenbereiche der Kühlvorrichtung eine hohe Oberflächenglattheit aufweisen. Auch diese Maßnahme der besonderen Oberflächenbehandlung von wenigstens in zwei Richtungen gekrümmten Flächen unterstützt die Lösung der gestellten Aufgabe. Sie führt auch zur Vergleichmäßigung der Kühlwirkung.

Die Oberfläche kann wenigstens bereichsweise elektropoliert ausgebildet sein; eine Möglichkeit, besonders glatte Oberflächen zu erreichen.

Die Erfindung sieht auch vor, daß im Kühlzylinder ein Verdrängungskörper vorgesehen ist, wobei in weiterer Ausgestaltung der Verdrängungskörper mit einer äußeren Blechwendel zur Erreichung einer definierten Kühlmittelströmung ausgerüstet ist. Auch diese Gestaltung führt in Verbindung mit der Anordnung und der konstruktiven Einzelheiten der Kühlvorrichtung zu einer Optimierung des Kühlverhaltens und damit zur Verhinderung von Polymer-Bildung an Stellen, die unerwünscht sind.

Für die Erfindung ist von der konstruktiven Seite auch wesentlich, daß die Einlauf- und Auslaufrohrbögen an der Reaktorwand über Adapter befestigt sind, die selbst wiederum Krümmungsradien aufweisen.

Diese Gestaltung ist deswegen nützlich, da auch an den unmittelbaren Wandbereichen, d.h. den Befestigungsbereichen der Kühlvorrichtung mit der Reaktorwand, scharfe Kantensprünge oder plötzliche starke Änderungen der Oberflächenbeschaffenheit vermieden werden. Auch hier ist dafür gesorgt, daß sanfte Übergänge über die Adapter und deren Krümmungsradien erreicht werden.

Die Erfindung ist nachstehend anhand der Zeichnung beispielsweise näher erläutert.

Diese zeigt in

Fig. 1 einen Ausschnitt aus einem Polymerisations-Reaktor nach dem Stand der Technik,

Fig. 2 einen entsprechenden Ausschnitt aus einem Polymerisations-Reaktor in der erfindungsgemäßen Gestaltung,

Fig. 3 eine vergrößerte Detaildarstellung teilweise geschnitten gemäß Kreis III in Fig. 2 sowie in

Fig. 4 einen Teilschnitt gemäß Kreis IV in Fig. 2.

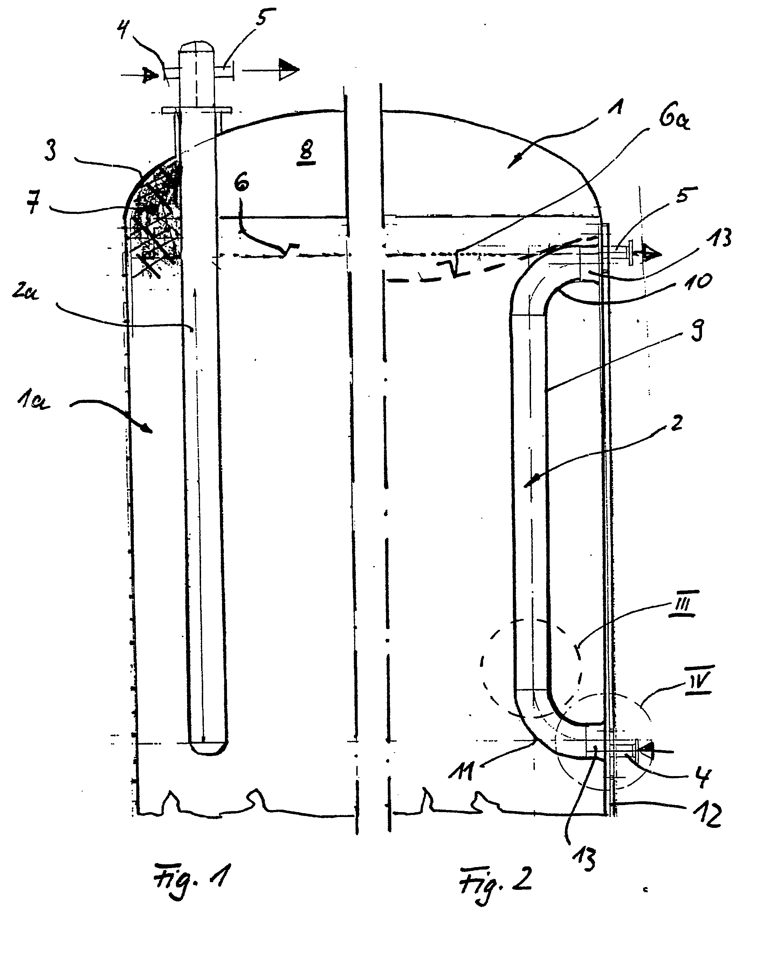

Das Reaktorgefäß nach dem Stand der Technik, wie er in Fig. 1 dargestellt ist, wird von einem allgemein mit 1a bezeichneten Polymerisations-Reaktor gebildet, in dem ein Kühlstab 2a als Stromstörer von oben durch den oberen Reaktorboden 3 hindurch eingesteckt ist. Der Kühlmitteleintritt 4 und der Austritt 5 sind jeweils am oberen Ende vorgesehen und mit entsprechenden Pfeilen dargestellt. Die Phasengrenzschicht zwischen Flüssigkeit und Dampfraum ist mit 6 bezeichnet.

Wie sich deutlich aus Fig. 1 ergibt, bildet sich ein Totraum 7 im Dom 8 zwischen der Phasengrenzschicht 6 und der Wand 3 des Reaktors 1a. In diesem Totraum 7 kommt es zur Bildung von Polymer-Klumpen, was teilweise schraffiert dargestellt ist.

Die Erfindung ist näher in Fig. 2 dargestellt. Hier besteht der Kühler 2, bzw. Stromstörer, aus einem zylindrischen Kühlrohr 9, an dessen oberen und unteren Ende Rohrkrümmer l0 bzw. ll angebracht sind, die an der mit l2 bezeichneten Behälterwand über Montagestutzen l3 befestigt sind. Der Kühlmitteleintritts- bzw. -austrittsstutzen ist auch im Falle der Fig. 2 je mit 4 bzw. 5 bezeichnet und weist entsprechende Pfeile auf.

In Fig. 2 sind zwei Verläufe der Phasengrenzlinie 6 dargestellt, nämlich die Phasengrenzlinie 6 bei Stillstand eines im Reaktor l vorgesehenen Rührers und eine Phasengrenzlinie 6a, die sich dann ergibt, wenn der Rührer betätigt wird.

Die Positionierung des Strömungsstörers 2 einschließlich seiner Rohrkrümmer l0 bzw. ll und seiner Montagestutzen l3 ist so gewählt, daß insbesondere auch der obere Rohrkrümmer l0 mit dem Montagestutzen l3 unterhalb der Phasengrenzlinie 6a bei eingeschaltetem Rührer liegen.

In Fig. 3 ist der Übergangsbereich dargestellt, den die Kühlvorrichtung 2 vom zylindrischen Mittelteil 9 zu einem der Rohrkrümmer ll bzw. l0 einnimmt. Diese Darstellung ist teilweise als Schnittdarstellung wiedergegeben.

Erkennbar ist im zylindrischen Teil 9 der Kühlvorrichtung 2 ein Verdrängungskörper l4 eingebaut, der an seinem Außenumfang mit einer Blechwendel l5 ausgerüstet ist, so daß das im Kühler 2 geförderte Kühlmedium hier eine definierte Strömung einnehmen muß, und zwar in dem zylindrischen Ringraum l6 zwischen der Innenwand des zylindrischen Teiles 9 des Kühlers 2 und der Außenwand des Verdrängungskörpers l4, geleitet durch die Blechwendel l5.

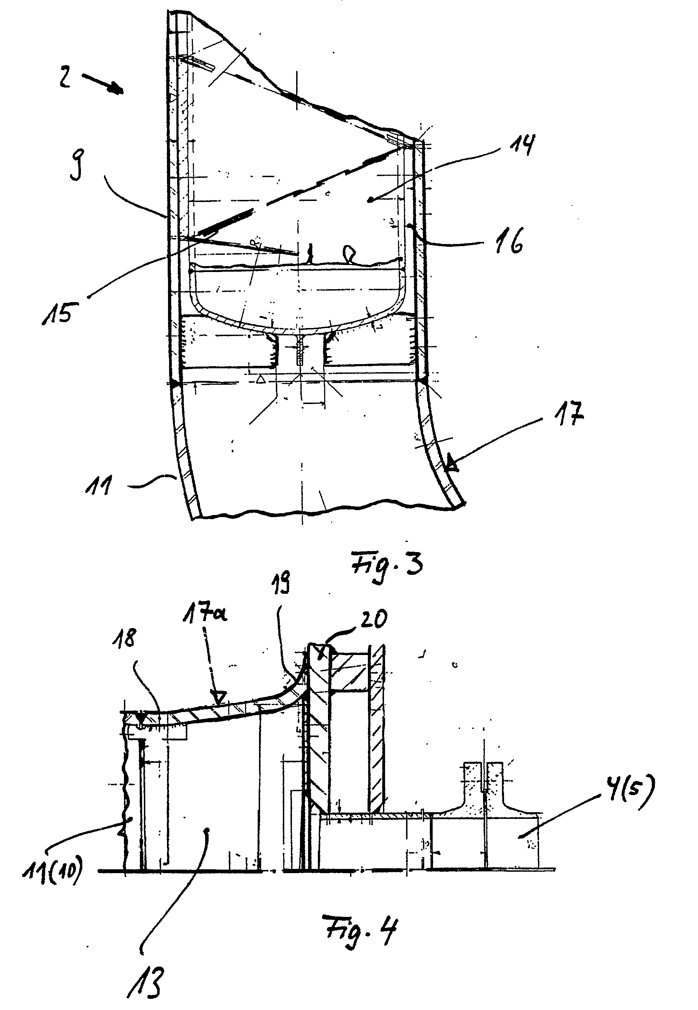

In Fig. 3 und Fig. 4 sind Pfeile l7 bzw. l7a auf die Außenoberfläche hinweisend eingezeichnet, die besagen sollen, daß diese Bereiche l7 bzw. l7a eine extrem glatte Oberflächenstruktur aufweisen, z.B. elektropoliert ausgebildet sind. Diese Bereiche sollen im wesentlichen von der zylindrischen Form abweichen, d.h. insbesondere die Rohrkrümmer l0 und die in Fig. 4 näher dargestellten Montagestutzen l3 betreffen.

Die in Fig. 4 vergrößert dargestellten Montagestutzen l3 sind randseitig mit Krümmungsradien versehen, die mit l8 bzw. l9 bezeichnet sind und so gestaltet wurden, daß ein sanfter Übergang in die in Fig. 4 mit 20 bezeichnete Außenwand des Reaktors l gewährleistet ist und auch der Übergang in den Rohrkrümmer ll bzw. l0.

Natürlich ist das beschriebene Auführungsbeispiel der Erfindung noch in vielfacher Hinsicht abzuändern, ohne den Grundgedanken zu verlassen. So ist die Erfindung insbesondere nicht auf Art und Gestaltung des Verdrängungskörpers l4 beschränkt oder aber die Gestaltung der Kühlmitteleinlauf- bzw. -auslaufstutzen 4 bzw. 5 und der dort dargestellten entsprechenden Wandbereiche. Wesentlich ist, daß die Übergänge zwischen den Elementen der Kühlvorrichtung 2 besonders sanft sind und die Oberflächenbeschaffenheit entsprechend glatt, um die Bildung von Polymerisations-Klumpen zu verhindern.

## Patentansprüche

l. Kühlvorrichtung zum Einbau in einen mit einem Rührwerk versehenen Polymerisations-Reaktor mit einem Kühlmitteleintritt, einem im wesentlichen in das zu kühlende Medium eintauchenden zylindrischen Kühlkörper und einem Kühlmittelaustritt, dadurch gekennzeichnet, daß der Kühlmitteleintritt (4,l3) und der Kühlmittelaustritt (5,l3) in den Kühlkörper (2) in der Gebrauchslage an der Reaktorwand unterhalb der Phasengrenzlinie (6a) des Mediums bei laufendem Rührer angeordnet sind.

2. Kühlvorrichtung nach Anspruch l, dadurch gekennzeichnet, daß der Kühlmitteleintritt und der Kühlmittelaustritt als bogenförmige Rohrstutzen (ll,l3 bzw. l0,l3) am Anfang und Ende des Kühlzylinders (9) ausgebildet sind.

3. Kühlvorrichtung nach Anspruch l oder 2, dadurch gekennzeichnet, daß wenigstens die von der axial geraden Zylindermantelfläche abweichenden Oberflächenbereiche der Kühlvorrichtung (2) eine hohe Oberflächenglattheit aufweisen.

4. Kühlvorrichtung nach einem der vorangehenden Ansprüche, dadurch gekennzeichnet, daß wenigstens Bereiche (l7) der Oberfläche elektropoliert ausgebildet sind.

5. Kühlvorrichtung nach einem der vorangehenden Ansprüche, dadurch gekennzeichnet, daß im Kühlzylinder (9) ein Verdrängungskörper (l4) vorgesehen ist.

6. Kühlvorrichtung nach einem der vorangehenden Ansprüche, dadurch gekennzeichnet, daß der Verdrängungskörper (l4) mit einer äußeren Blechwendel (l5) zur Erreichung einer definierten Kühlmittelströmung ausgerüstet ist.

7. Kühlvorrichtung nach einem der vorangehenden Ansprüche, dadurch gekennzeichnet, daß die Einlauf- und Auslaufbogen (l0,ll) an der Reaktorwand mittels Adapter befestigt sind, welche Krümmungsradien aufweisen.

## Claims

1. A cooling apparatus for installation in a polymerisation reactor provided with an agitator, comprising a coolant intake, a cylindrical cooling body which is immersed substantially in the medium to be cooled and a coolant outlet, characterised in that the coolant inlet (4, l3) and the coolant outlet (5, l3) into the cooling body (2) are arranged in the position of use at the reactor wall beneath the phase boundary line (6a) of the medium when the agitator is running.

2. A cooling apparatus according to claim 1 characterised in that the coolant inlet and the coolant outlet are in the form of arcuate pipe connections (11, l3 and 10, l3) at the beginning and the end of the cooling cylinder (9).

3. A cooling apparatus according to claim 1 or claim 2 characterised in that at least the surface regions of the cooling apparatus (2), which deviate from the axially straight peripheral surface of the cylinder, have a high degree of surface smoothness.

4. A cooling apparatus according to one of the preceding claims characterised in that at least regions (17) of the surface are electropolished.

5. A cooling apparatus according to one of the preceding claims characterised in that a displacement body (14) is provided in the cooling cylinder (9).

6. A cooling apparatus according to one of the preceding claims characterised in that the displacement body (14) is provided with an outer sheet metal helix (15) to provide a defined flow of coolant.

7. A cooling apparatus according to one of the preceding claims characterised in that the intake and discharge bends (10, 11) are secured to the reactor wall by means of adaptors which have radii of curvature.

**Revendications**

1. Dispositif de refroidissement destiné à être monté dans un réacteur de polymérisation muni d'un agitateur avec une entrée de réfrigérant, un corps de refroidissement cylindrique plongeant sensiblement dans le milieu à refroidir et une sortie de réfrigérant, caractérisé en ce que l'entrée de réfrigérant (4, 13) et la sortie de réfrigérant (5, 13) dans le corps de refroidissement (2) sont disposées en position d'utilisation sur la paroi du réacteur au dessous de la ligne (6a) de séparation des phases du milieu lorsque l'agitateur fonctionne.

2. Dispositif selon la revendication 1, caractérisé en ce que l'entrée et la sortie de réfrigérant sont sous forme de tubulures courbées (11, 13 et 10, 13) au début et à l'extrémité du cylindre de refroidissement (9).

3. Dispositif de refroidissement selon la revendication 1 ou 2, caractérisé en ce qu'au moins les zones superficielles du dispositif de refroidissement (2) qui s'écartent de la surface axiale rectiligne de l'enveloppe cylindrique présentent un poli de surface élevé.

4. Dispositif de refroidissement selon l'une des revendications précédentes, caractérisé en ce qu'au moins les zones (17) de la surface sont polies électriquement.

5. Dispositif de refroidissement selon l'une des revendications précédentes, caractérisé en ce qu'un corps déplaceur (14) est prévu dans le cylindre de refroidissement (9).

6. Dispositif de refroidissement selon l'une des revendications précédentes, caractérisé en ce que le corps déplaceur (14) est muni d'une hélice externe en tôle (15) pour obtenir un courant de réfrigérant défini.

7. Dispositif de refroidissement selon l'une des revendications précédentes, caractérisé en ce que les coudes d'entrée et de sortie (10, 11) au niveau de la paroi du réacteur soient fixés par l'intermédiaire de raccords qui présentent des rayons de courbure.

Fig. 1

Fig. 2

Fig. 3

Fig. 4